# EUROPEAN PATENT SPECIFICATION

(11) **EP 2 724 632 B1**
(45) Date of publication and mention of the grant of the patent: **02.08.2017**
(21) Application number: 13187644.3
(22) Date of filing: 08.10.2013
(51) Int. Cl.: A43B 1/00, A43B 3/00, A43B 5/02, A63B 71/06, A63B 24/00, G01S 13/34, G01S 13/75, G01S 13/82, H01Q 1/27, H01Q 1/44

(54) **Sports apparatus and method**
Sportvorrichtung und Verfahren
Appareil et procédé de sport

(30) Priority: 25.10.2012 US 201213660385
(43) Date of publication of application: 30.04.2014
(73) Proprietor: Sstatzz Oy, 00950 Helsinki (FI)
(72) Inventor: Hohteri, Harri, 00180 Helsinki (FI)
(74) Representative: Suominen, Kaisa Liisa

(56) References cited:
- EP-A2- 2 025 368
- EP-A2- 2 025 372
- JP-A- H06 210 041
- US-A1- 2009 325 739
- US-A1- 2010 285 903
- US-A1- 2011 304 497

## Description

### BACKGROUND

### Field

The aspects of the present disclosure generally relate to a sports apparatus, for example to sports apparatus including one or more projectiles, for example one or more balls, wherein the projectiles include one or more sensors and a wireless communication interface, and a data processing arrangement also equipped with a wireless interface, for example implemented via a smart phone and/or a personal computer and/or a remote server with data processing functionality, wherein the one or more sensors of the one or more projectiles provide sensor signals indicative of movements of the one or more projectiles, wherein the sensor signals are communicated to the data processing arrangement for analysis and recording. Moreover, the present disclosure relates to methods of operating aforesaid sports apparatus for recording movement of the one or more projectiles for subsequent analysis and reporting. Furthermore, the present disclosure relates to software products recorded on machine-readable data storage media, wherein the software products are executable upon computing hardware for implementing aforesaid methods.

### Brief Description of Related Developments

It is well known to track movement of one or more projectiles, for example one or more balls, utilized when playing a sports game, for example football or basketball, to determine statistical information relating to the sports game. Such statistical information can include a number of goals or points scored, and performance of one or more players of the sports game. Such tracking has often been implemented using cameras, personnel collating statistics manually as well as using sensors included in the one or more projectiles. However, known approaches for analysing movement of the one or more projectiles are not well developed, such that inadequate analysis of sports games utilizing the one or more projectiles is not presently achievable.

In US Patent Publication No. US2012/0058845A1, there is described a basketball which incorporates motion sensors. The motion sensors include, for example, one or more accelerometers, one or more angular rate gyroscopic sensors and one or more magnetometers. In the application, it is elucidated that sensor signals from the motion sensors can be analyzed to generate statistical results, but the application is devoid of detail of how the statistical analysis can be performed in practice. US 2011/304497 A1 discloses a system for monitoring various sports metrics which is based on a number of sensors provided in for example a ball and/or a player's apparel, including a frequency chirp-based distance estimation between ball and player.

There arises therefore a problem that known apparatus for providing analysis of trajectories of one or more projectiles associated with sports events are not sufficiently evolved and do not provide statistical analysis to a fullest extent which is potentially feasible to achieve.

### SUMMARY

The problem posed is solved according to the invention by the technical features of the apparatus of claim 1 and the method of claim 8.

The present disclosure provides an improved sports apparatus, wherein movements of one or more projectiles employed in sports activities are more fully analyzed using the sports apparatus.

The present disclosure provides an improved method of using sports apparatus, wherein the method is capable of analyzing movements of one or more projectiles employed in sports activities more fully analyzed using the sports apparatus.

In one aspect, the present disclosure provides a sports apparatus for monitoring movement of one or more projectiles associated with a sporting event. In one embodiment, the sports apparatus for monitoring movement of a sport projectile includes a sensor and a wireless interface disposed within the sport projectile for communicating sampled data signals from the sensor, a portable communication device in wireless communication with the wireless sensor for receiving sampled data signals from the wireless sensor, the sampled data signals indicative of a motion of the sport projectile. The portable communication device includes a controller having a memory including programming instructions that when executed by the processor cause the controller to detect a sensor signal from the wireless interface, determine a motion characteristic of the sport projectile from the motion characteristic from the sensor signal, and determine if the motion characteristic is passage of the sports projectile through a goal structure, motion of the sports projectile after a shot or an impact of the sport projectile with an object.

The mobile telephone executing the one or more software or computer program products is capable of providing more full analysis of movements of the one or more projectiles.

In another aspect, the present disclosure provides a method of using a sports apparatus for monitoring movement of one or more projectiles associated with a sporting event. The method involves using a mobile telephone coupled in wireless communication with the one or more projectiles for receiving the sampled data signals indicative of motion of the one or more projectiles; and using the mobile telephone to execute one or more software products therein for analyzing the sampled data signals received at the mobile telephone for providing analysis results indicative of a nature of trajectory of the one or more projectiles.

In another aspect, the present disclosure provides a software or computer program product recorded on machine-readable data storage media. The software or computer program product includes or comprises non-transitory computer readable code means, which is executable upon computing hardware or in a processor devices for implementing the methods and processes of the present disclosure.

It will be appreciated that features of the present disclosure are susceptible to being combined in various combinations without departing from the scope of the invention as defined by the appended claims.

### BRIEF DESCRIPTION OF THE DRAWINGS

Embodiments of the present disclosure will now be described, by way of example only, with reference to the following diagrams wherein:
FIG. 1 is a schematic illustration of an example embodiment of a sports apparatus in accordance with the present disclosure;
FIG. 2 is a schematic illustration of an implementation of a projectile of the sports apparatus of FIG. 1 ;
FIG. 3 is an illustration of a projectile path associated with the system of FIG. 1;
FIG. 4 is an illustration of example movement signals associated with a projectile of the system of FIG. 1;
FIG. 5 is an illustration of example embodiment of a sports apparatus in accordance with the present disclosure;
FIG. 6 is an example measured sensor data from a sports apparatus (basket ball) for success full shot; and
FIG. 7 is an example measured sensor data from a sports apparatus (basketball) for missed shot.
FIG. 8 is a block diagram of one embodiment of an exemplary environment that can be used to practice aspects of the present disclosure.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF ILLUSTRATIVE EMBODIMENTS

The following detailed description discloses aspects of the claimed invention and the ways it can be implemented. However, the description is not intended to define or limit the invention, such definition or limitation being solely contained in the claims appended thereto. Although the best mode of carrying out the invention has been disclosed comprehensively, those in the art would recognize that other embodiments for carrying out or practicing the invention are also possible.

In overview, the present disclosure relates to a sports apparatus for use at a sporting event, wherein the sports apparatus comprises one or more projectiles, for example balls, discus, shuttlecock or similar, and a data processing arrangement for receiving wireless transmissions from the one or more projectiles indicative of movement of the one or more projectiles, wherein the data processing arrangement is operable to receive the wireless transmissions from the one or more projectiles and generate various types of statistical analysis results which enable performance at the sporting event to be assessed and/or recorded.

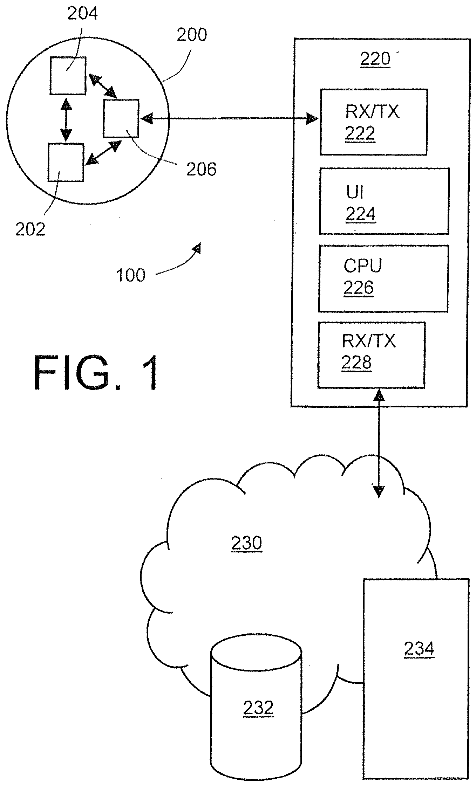

The sports apparatus, indicated generally by **100** in FIG. 1, will now be described. Referring to FIG. 1, the apparatus **100** includes at least one projectile **200,** for example a basketball. During the sporting event, the projectile **200** is acted upon by one or more human participants at the sporting event, as well as bouncing on a ground surface and one or more sports structure, for example basketball nets and associated back walls. The projectile **200** includes within its outer protective layer one or more sensors **204,** for example one or more accelerometers, one or more gyroscopic sensors, one or more magnetometers, for recording motion, rotation, spin, and acceleration experienced by the projectile **200** in use. Optionally, the projectile **200,** for example a ball, includes location transducers **202,** for example a radio beacon arrangement, for sending signals to base stations for position measurement purposes, for example by triangulation based on received wireless signal strength at the radio beacon arrangement; alternatively, or additionally time-of-flight of transmitted pulse radio signals from the projectile **200** is employed by the apparatus **100** for determining an instantaneous spatial position of the projectile **200** within a given playing area associated with the sporting event. Optionally, the location transducers **202** also include a GPS receiver for determining a spatial position of the projectile from Earth-orbiting position reference satellites; such position determination is, for example, beneficial when the projectile **200** is implemented as a golf ball, wherein the sporting event is a golf tournament being executed over a spatially extensive golfing range. The projectile **200** also includes a wireless interface **206** for communicating sampled sensor signals from the one or more sensors **204,** and optionally the location transducers **202** to a wireless receiving location remote from the projectile **200.** Optionally, the projectile **200** includes a miniaturized server arrangement, for enabling the projectile **200** to be accessed conveniently using hypertext transport protocol (HTTP) communications.

The sports apparatus **100** further includes a mobile telephone **220,** also known as a cell phone. Beneficially, the mobile telephone **220** is a smart phone with sufficient computational power in its central processing unit **226** to perform analysis of movements of the projectile **200** and determine its spatial location. The mobile telephone **220** includes a user interface **224** for presenting statistical analysis results from processing data communicated from the projectile **200** to the mobile telephone **220** via a wireless interface **222** of the mobile telephone **220.** Moreover, the smart telephone **220** includes a smart wireless interface **228** for enabling the mobile telephone **220** to communicate via the Internet or similar data communication network to a server system **234** and/or to a remote database **232.** Optionally, the apparatus **100** is operable to function with data exchanges occurring directly between the server system **234** and the remote database **232** when performing statistical analysis of sensor signals generated during motion of the projectile **200.**

Examples of methods of use of the apparatus **100** will now be described. In a first example, the mobile telephone **220** sends information after each sports practice session, for example to Facebook ("*Facebook*" is a registered trade mark), namely an athlete using the apparatus **100** is able to share statistical analysis results generated by the apparatus **100** within a social network, for example for competitively improving individual sports performance. Optionally, the mobile telephone **220** is beneficially configurable to send a tweet every time the athlete makes a successful shot of the projectile **200.**

In a second example, the mobile telephone **220** is operable to send one or more status updates to a social network each time the athlete is able to make a three-point shot of the projectile **200,** namely able to score from a long distance behind a three-point line during the sporting event. In addition to third-party services such as Facebook and or Twitter ("*Twitter*" is a registered trade mark, associated with the "*Twittersphere*"), analytical statistical results generated by the system **100** can be sent to any specified service hosted on the Internet. Optionally, the results can be public or restricted, for example for personal use or for use by a dedicated group, for example a sports coach or other members of a specified team of athletes.

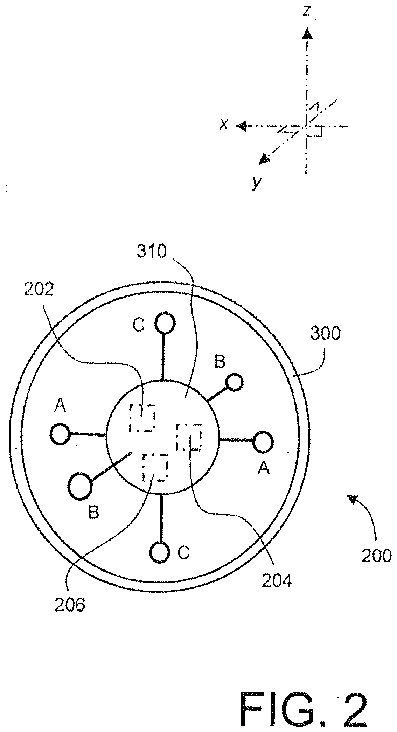

Referring next to FIG. 2, an example implementation of the projectile **200** is shown. The projectile **200** has an outer region **300,** for example fabricated from an elastically deformable material, and a central armoured core **310** for accommodating the one or more sensors **204,** the wireless interface **206,** and optionally the location transducers **202.** Beneficially, the wireless interface **206** is implemented as three sets of dipoles A-A, B-B, C-C which are individually excitable by the wireless interface **206**; the dipoles are beneficially implemented in an orthogonal manner along three Cartesian *x*, *y*, *z* axes as shown. When communicating data, the wireless interface **206** sends data via the three dipoles which are excited at mutually different carrier-signal frequencies, such that the projectile **200** is capable of providing a pseudo-omnidirectional wireless emission polar pattern which avoids data dropout as the projectile **200** moves in use, for example rotates, and thus allows for more accurate position determination based upon received wireless signal strength from wireless emission from the projectile **200.** Optionally, batteries of the projectile **200** are recharged by wireless inductive charging when the projectile **200** is not in use, for example in a storage unit overnight, thereby enabling the outer region **300** of the projectile **200** to be hermetically sealed, for example to avoid water ingress into the central armoured core **310** when the projectile **200** is in use in adverse weather conditions. Sensors might be charged also by using internal power generator taking energy from the movement of the ball. Example of such power generator can be kinetic power generator. Additional examples of power generation for the sensors might include solar cells etc. Sensor(s) in sporting equipment can be installed in the cover or inside of the sporting equipment. For example, in a golf ball the sensor can be in the middle of the golf ball i.e. embedded in the structure. If the sporting event is for example football (used in American football) there might be more than one sensor, for example two, i.e. one in both ends. This would enable more accurate analysis.

Software or computer program products include machine readable instructions recorded on machine-readable data storage media and executable upon computing hardware or in a processor device of the apparatus **100** are employed for analyzing movements of the projectile **200.** Such analysis is optionally based upon classical physics, for example according to Newtonian Laws of motion. Alternatively, such analysis is based upon other computational techniques that will be described later.

A problem encountered when analyzing trajectories of the projectile **200** based upon classical physics is that such analysis requires a considerable number of data samples recording movements of the projectile **200** to be communicated; this is especially pertinent when the projectile **200** is subject to rapid movements, for example bouncing within a confined space wherein the projectile **200** rapidly changes its direction of motion.

Optionally, a volume of data needing to be communicated from the projectile **200** via its wireless interface **206** is susceptible to being reduced by computing hardware, for example a PIC micropower microcontroller or similar, included in the core **310** collecting sensor data at a high rate, for example at a 1 kHz sampling rate or higher, and then processing the sampled sensor data to determine whether or not changes in the sampled sensor data are greater than a defined threshold for at least M samples, wherein M is an integer greater than unity; in an event that changes in sensor data are less than the threshold during the M samples, no data is communicated from the projectile **200** to the mobile telephone **220.** Optionally, the projectile **200** includes a data buffer for storing sampled sensor data for coping with a situation where the projectile **200** is subject to a long sustained period of rapid changes in motion.

Additionally in order to save power the sending of data can be tricked to take place only when there is movement of the sporting equipment. In general the sending of data from the sporting equipment sensors can be continuous, burst mode (i.e. sending buffered data) pull based (i.e. mobile phone requests the data) or push based i.e. sensor sends as unicast, multicast or broadcast the data to one or more receiving mobile phones or other stations. In some embodiments the sensors can perform calculations in the sporting event and send all or some of the data in analysed format to receivers or the service.

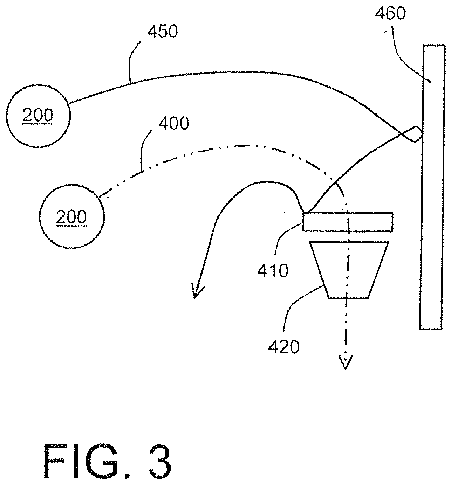

Referring to FIG. 3, a set of example trajectories of the projectile **200,** for example a basketball, is illustrated. A first trajectory **400** of the projectile **200** follows an ideal path to pass centrally past a basketball net rim **410** and down through its associated net **420,** without the projectile **200** being rapidly laterally displaced or its rotation characteristic being temporally abruptly altered. A second trajectory **450** of the projectile **200** follows a more complex path to a back wall **460** whereat the projectile **200** impacts and bounces back to hit the basketball net rim **410** to bounce subsequently therefrom away from the net **420.** Motions of the projectile **200** as sensed by the projectile **200** for the first and second trajectories **400, 450** are radically different and are susceptible, for example, to being each recognized by a neural network algorithm executing on a least one of the mobile telephone **220** and the server system **234.** Beneficially, most of the neural network processing is performed on the mobile telephone **220** for reducing a volume of data needing to be communicated from the mobile telephone **220** to the server system **234,** thereby conserving wireless communication bandwidth resources. Additionally sensor(s) in a sporting equipment can also include magnetometer or similar to recognize change in magnetic field. This is beneficial for detecting for example if a basketball goes thru basketball net rim **410.**

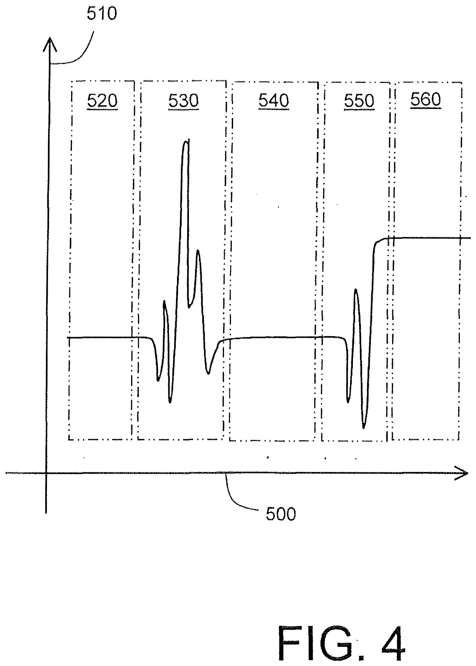

Referring the FIG. 4, sampled sensors signals corresponding to the aforesaid second trajectory **450** are shown. In FIG. 4, an abscissa axis **500** denotes a passage of time from left to right, and an ordinate axis **510** denotes samples sensor signal value. A first portion **520** of the trajectory **450** has relatively small changes in sampled sensor data, whereas bouncing from the back wall **460** results in rapidly changing data in a second portion **530.** A third portion **540** of the trajectory **450** between the back wall **460** and basketball net rim **410** has associated therewith relatively little change in sample sensor data from the projectile **200,** whereas the bounce outward from the basketball net rim **410** results in a fourth portion **550** of the trajectory **450** with rapid changes. Finally, a fifth portion **560** of the trajectory **450** where the projectile **200** is bouncing outwardly away from the basketball net rim **410** has relatively slowly changing sampled sensor data associated therewith.

The aforementioned neural network software, for example downloaded to the mobile telephone **220** as a software application, for example from an "App Story", is beneficially trained to recognize different patterns of movement of the projectile **200** during the sporting event. For example, the projectile **200,** for example a basketball ball, is shot towards a central opening of the basketball net rim **410** for N times, and a user interface (UI), for example a touch screen, of the mobile telephone **220** is used to inform the neural network software whether or not the shot was successful, namely passed correctly through the net **420.** Moreover, the neural network software is also informed via the user interface (UI) if the shot were a normal shot or three-point shot. After a series of such learning exercises, the neural network software is capable of resulting in the mobile telephone **220** being able to recognize immediately what type of shot has been executed for the projectile **200.** Optionally, learning parameters for the neural network software can be pre-loaded into the mobile telephone **220,** thereby avoiding a need for aforesaid training, for example in an event that sensor characteristics of the projectile **200** are known beforehand, for example the projectile **200** is a mass-produced proprietary product. Optionally, users are able to share their neural network software training parameters with other users of the apparatus **100.**

The apparatus **100** is capable of being employed in a wide range of sports, for example bowling, tennis, football, rugby, basketball, baseball, cricket, water polo, but not limited thereto. By the mobile telephone **220,** it is meant one or more of communication devices such as: telephones, personal data assistants (PDA's) provided with wireless interfaces, tablet computers provided wireless interfaces, personal computers or laptops with wireless interface or other wireless computing device but not limited thereto.

### Example apparatus

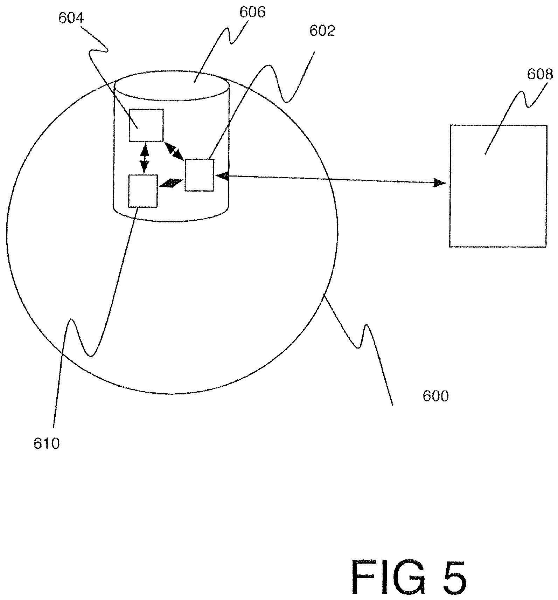

FIG. 5 shows example basket ball 600 which was used to test some aspects of the disclosure. A cylinder like housing 606 was used to house needed electronics. Sensors 604 included at least one of accelerometer, gyroscope and magnetometer. The sensor data was collected and buffered by microcontroller 610 and data was send in periodic matter over radio interface using Bluetooth transmitter 602. In the set up sample rate to collect data from the sensors was 70 Hz. The data was sent to receiving station 608. In the setup the receiving station was a laptop style computer equipped with Bluetooth chip to enable communication with the basketball 600. Alternatively, the receiving station could be for example mobile phone, smart phone i.e. any computing device.

In general the radio communication from the ball 600 can be done using conventional radio interfaces such as Bluetooth radio. The used protocols can include for example using Internet Protocol (IP) stack in addition to proprietary protocols. In the test arrangement the amount of data collected during the shot and hitting the rim and floor exceeded data communication speed of the used Bluetooth connection therefore the buffering was used and the data was transferred during low movement stage of the ball.

In the example measurements accelerometer data of the sensors was collected and accelerometer from each x, y, and z accelerometers was summed. i.e. total experienced accelerometer was stored initially to memory of the microcontroller 610. The accelerometer data was sent to computing device 608.

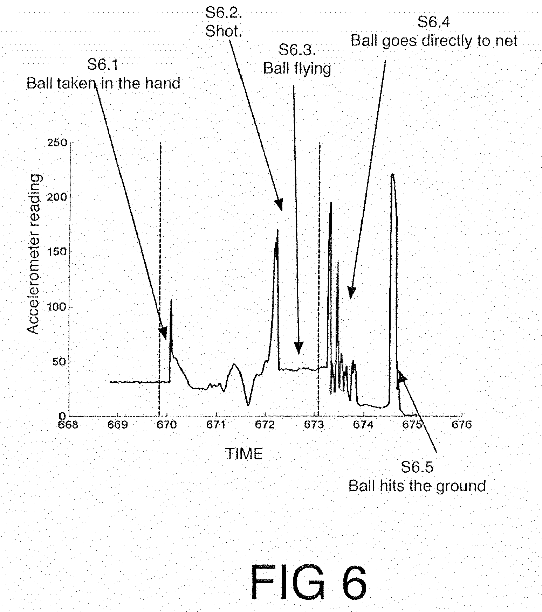

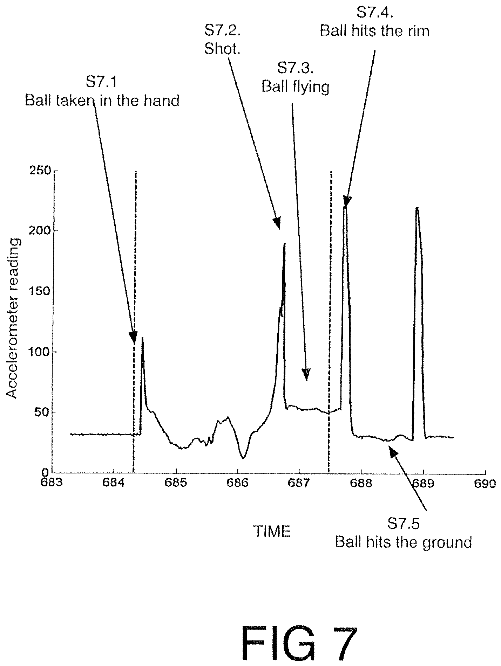

FIGS. 6 and 7 show the results of the measured values of the total acceleration of a basketball during a shot. The measured values of total acceleration generally represents the total acceleration as a function of time. Accelerometer reading is in arbitrary units and has not been normalized.

The data is used in a mathematical model such as neural network in order to classify the shots into makes and misses. This modelling may involve pre-processing of the data in order to make the model more transparent and more effective. The pre-processing may be done using statistical techniques such as principal component analysis or by calculating given descriptive statistics for measured trajectories. These descriptive statistics can be, for example, maximal and minimal values of the acceleration (i.e., peaks of the curves), the time instants related to these peaks, the lengths of the time intervals between these peaks, or other properties of the curves during given intervals such as variance (measuring the variability of the acceleration) or the sign of derivative acceleration during given intervals (describing whether the acceleration increases or decreases during the time interval). These descriptive statistics provide information about the trajectory of the basketball that is easier to use in the mathematical model instead of the raw data. For example, the length of the time interval between the release of the shot and the time when the ball hits the rim provides implicit information about the arc of the shot, as a higher arc leads to longer flight times. On the other hand, highly variable values of the acceleration after hitting the rim imply interaction between the basketball and the net (suggesting a made shot) instead of smooth acceleration curve related the "free flight" of a missed shot.

Referring to FIG. 6, in step S6.1 the ball is taken from the floor by the player. The player shoots the ball in step S6.2. In step S6.3 the ball is flying for about one second. Accelerometer reading does not change considerable during the flight time. In step S6.4 the ball goes directly to the net. In the data one can observe periodic fluctuations with decreasing amplitude. The said periodic behaviour can be found from the data automatically for example by performing Fourier analysis of the data. In step S6.5 the ball hits the ground and a large accelerometer peak is observed.

FIG. 7 shows other example of measured total accelerometer data. In Step S7.1. the ball is taken in the hand from the floor. In step S7.2 the ball is shot and in step S7.3 the ball is flying. One can see that the form factor of the accelerometer data between steps S7.1-S7.3 resembles form factor of figure 6 and steps S6.1-S6.3 respectively indicating feasibility of using said data as one reference for neural network system. In step S7.4 the ball hits the rim and then after about on second hits the ground in step S7.5.

According to embodiments each or some of the measurements are used as base line for the learning algorithms. As an example the data can be analysed and marked manually to form training patterns for said neural networks. Said training patterns can be shared in the system in order to be used by all or some of the other players. The learning database can be thus grown and developed by using input from plurality of players.

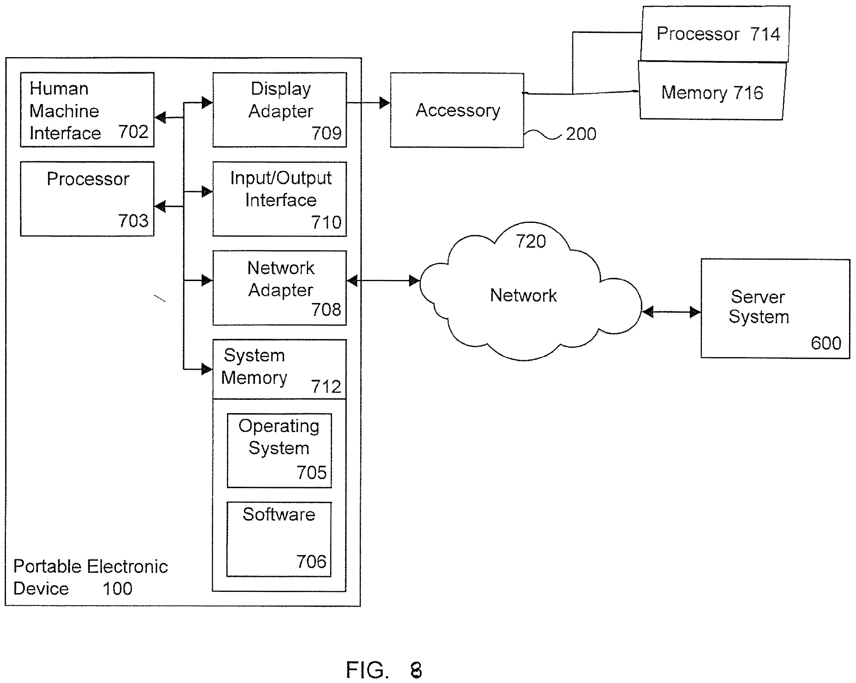

FIG. 8 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

As is illustrated in Figure 8, in one embodiment, the components of the portable electronic device 100 can include, but are not limited to, one or more processors or processing units 703, an operating system 705, a network adapter 708, a system data storage device or memory 712, an Input/Output Interface 710, a display adapter 709 and a system bus 713 that couples various system components including the processor 703 to the system memory 712. In the case of multiple processing units 703, the system can utilize parallel computing.

The portable electronic device 100 typically includes computer readable media. Exemplary readable media can be any available media that is non-transitory and accessible by the portable electronic device 100 and comprises, for example and not meant to be limiting, both volatile and non-volatile media, removable and non-removable media. The system memory 712 comprises computer readable media in the form of volatile memory, such as random access memory (RAM), and/or non-volatile memory, such as read only memory (ROM). The system memory 712 typically contains data such as demand control data 707 and/or program modules such as an operating system 705 that is immediately accessible to and/or are presently operated on by the processing unit 703. In one aspect, the system memory 712 contains computer executable codes sections for performing the processes and steps described herein.

The present methods and systems can be operational with numerous other general purpose or special purpose computing system environments or configurations. Examples of well-known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, and distributed computing environments that comprise any of the above systems or devices, and the like.

The processing of the disclosed methods and systems can be performed by software components and computer program products which include or comprise non-transitory computer readable code means that when executed by a processor device are configured to execute the aspects of the methods of the present disclosure. The disclosed systems and methods can be described in the general context of computer-executable instructions, such as program modules, being executed by one or more computers, processors or other devices. Generally, program modules comprise computer code, routines, programs, objects, components, data structures, etc. that perform particular tasks or implement particular abstract data types. The disclosed methods can also be practiced in distributed computing environments where tasks are performed by remote processing devices that are linked through a communications network. In a distributed computing environment, program modules can be located in both local and remote computer storage media including memory storage devices.

The systems and methods disclosed herein can be implemented via one or more portable electronic devices or mobile phones 220, such as that shown in Figure 1. As is illustrated in Figure 1 in one embodiment, the components of the apparatus 100 can include, but are not limited to, a wireless interface 228, one or more processors or processing units 226, a system data storage device or memory 225, a user interface 224, and a short range radio communication device 222. The mobile phone 220 is communicatively coupled to a network such as the Internet 230, which is also communicatively coupled to a database or memory 232 and a server system 234.

The apparatus 100 and the mobile phone 220, for example, typically include computer readable media. Exemplary readable media can be any available media that is non-transitory and accessible by the mobile phone device 220 and comprises, for example and not meant to be limiting, both volatile and non-volatile media, removable and non-removable media. The system memory 225 comprises computer readable media in the form of volatile memory, such as random access memory (RAM), and/or non-volatile memory, such as read only memory (ROM). The system memory 225 typically contains data and/or program modules that are immediately accessible to and/or are presently operated on by the processing unit 226. In one aspect, the system memory 225 contains computer executable codes sections for performing the processes and steps described herein.

In another aspect, the apparatus 100, as well as the mobile phone 220, can also comprise other non-transitory, removable/non-removable, volatile/non-volatile computer storage media. By way of example, the system memory 225 can in one embodiment include or comprises a mass storage device that can provide non-volatile storage of computer code, computer readable instructions, data structures, program modules, and other data for the appartus 100. For example and not meant to be limiting, a mass storage device can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

The wireless interface is a short range radio receiver/transmitter and the portable communication device is a laptop computer or smart phone or tablet computer. The sport projectile is a ball or a puck.

Modifications to embodiments of the invention described in the foregoing are possible without departing from the scope of the invention as defined by the accompanying claims. Expressions such as "including", "comprising", "incorporating", "consisting of", "have", "is" used to describe the present invention are intended to be construed in a non-exclusive manner, namely allowing for items, components or elements not explicitly described also to be present. Reference to the singular is also to be construed to relate to the plural.

## Claims

1. A sports apparatus (100) for monitoring movement of a sport projectile (200), comprising:
a sensor (204) disposed within the sport projectile;
a wireless interface (206) disposed within the sport projectile for communicating sampled data signals from the sensor (204);
a portable communication device (220) that can be coupled in wireless communication with the sensor in the sport projectile (200) for receiving sampled data signals from the sensor (204), the sampled data signals indicative of a motion of the sport projectile (200);
wherein the portable communication device (220) comprises a controller having a memory including programming instructions that when executed by the processor are configured to cause the controller to:
detect a sensor signal from the wireless interface, the sensor signal comprising sampled data signals from the sensor;
determine a motion characteristic of the sport projectile from the motion characteristic from the sensor signal; and
determine if the motion characteristic comprises passage of the sports projectile through a goal structure (410);
determine if the motion characteristic comprises motion of the sports projectile after a shot; and
determine if the motion characteristic comprises an impact of the sport projectile with an object by:
detecting a period of small changes in the sensor data by comparing an amplitude of the sensor data to a first predetermined threshold within a predetermined time period and determining that the amplitude of the sensor data is less than the predetermined threshold and substantially constant within the predetermined time period; and
detecting a period of rapidly changing sensor data by determining that the amplitude of the sensor data is greater than the predetermined threshold and is varying within the predetermined time period.

2. The sports apparatus (100) of claim 1, comprising a central armoured core (310) within the sports projectile for housing the sensor (204) and the wireless interface (206), wherein the wireless interface comprises three sets of dipoles (A-A, B-B, C-C), each individually excitable by the wireless interface and wherein the three dipoles are disposed in an orthogonal manner along three Cartesian axes, and comprising an inductively charged battery for the wireless interface disposed within the sport projectile (200).

3. The sports apparatus of claim 1, wherein the portable communication device (220) comprises a controller having a memory including programming instructions that when executed by the processor are configured to cause the controller to:
detect a sensor signal from the wireless interface (206) corresponding to a change in a magnetic field; and
determine a passage of the sport projectile through the goal structure based on the change in the magnetic field and the determined motion characteristic, and/or
determine a point value associated with the passage of the sport projectile through the goal structure by:
detecting a sensor signal from the wireless interface corresponding to a location of the sport projectile at a point in time corresponding to a starting point of the motion characteristic;
comparing the location of the sport projectile at the starting point of the motion characteristic to a mapping of a playing area; and
determining the point value based on the location of the sport projectile at the starting point of the motion characteristic relative to the mapping of the playing area, wherein a different point value can be assigned to a different starting point.

4. The sports apparatus of claim 1, wherein the portable communication device comprises a controller having a memory including programming instructions that when executed by the processor are configured to cause the controller to:
detect a first sensor signal indicative of the sports projectile being elevated off a floor of a sport area, the first sensor signal comprising an accelerometer signal that is less than a first pre-determined amplitude;
detect a second sensor signal indicative of a launching of the sports projectile into the air, the second sensor signal comprising an accelerometer signal that is greater than the first predetermined amplitude but less than a second predetermined amplitude;
detect a third sensor signal indicative of an airborne travel of the sports projectile, the third sensor signal comprising an accelerometer signal that is substantially constant with an amplitude that is less than the first predetermined amplitude;
detect a fourth sensor signal indicative of the passage of the sports projectile through the goal structure; and
detect a fifth sensor signal indicative of the sports projectile striking an object, the fifth sensor signal comprising an accelerometer signal that is greater than a third predetermined amplitude.

5. The sports apparatus of claim 1, wherein the central core (310) comprises a memory (712) for storing data from the sensor, the memory including programming instructions that when executed by a processor in the wireless interface, are configured to cause the wireless interface to:
compare changes in sampled sensor data to a predefined threshold for a predetermined number of data samples;
transmit sensor data to the portable communication device only when the changes in the sampled sensor data exceed the predefined threshold; and
store the sampled sensor data when the changes in the sampled sensor data are less than the predefined threshold.

6. The sports apparatus of claim 5, the memory including programming instructions, that when executed by a processor in the wireless interface, are configured to cause the wireless interface to:
determine that the changes in the sampled sensor data are greater than the predetermined threshold over a time period exceeding a predetermined time period; and
storing the changes in the sampled sensor data.

7. The sports apparatus of claim 1, comprising a server arrangement (234) remote from and communicatively coupled with the portable electronic device (220), the portable electronic device configured to communicating analysis data of the sensor signal to a network.

8. A method of using a sports apparatus for monitoring movement of a sports projectile including a sensor and a wireless interface disposed within the sport projectile for communicating sampled data signals from the sensor, and a portable communication device coupled in wireless communication with the sensor in the sport projectile for receiving sampled data signals from the sensor, the sampled data signals indicative of a motion of the sport projectile, the method comprising:
detecting in the portable communication device, a sensor signal from the wireless interface, the sensor signal comprising sampled data signals from the wireless sensor:
determining a motion characteristic of the sport projectile from the motion characteristic from the sensor signal; and
determining if the motion characteristic comprises passage of the sports projectile through a goal structure;
determining if the motion characteristic comprises motion of the sports projectile after a shot; and
determining if the motion characteristic comprises an impact of the sport projectile with an object by
detecting a period of small changes in the sensor data by comparing an amplitude of the sensor data to a first predetermined threshold within a predetermined time period and determining that the amplitude of the sensor data is less than the predetermined threshold and substantially constant within the predetermined time period; and
detecting a period of rapidly changing sensor data by determining that the amplitude of the sensor data is greater than the predetermined threshold and is varying within the predetermined time period.

9. The method of claim 8, comprising:
detecting a sensor signal from the wireless interface corresponding to a change in a magnetic field; and
determining a passage of the sport projectile through the goal structure based on the change in the magnetic field and the determined motion characteristic, and/or
determining a point value associated with the passage of the sport projectile through the goal structure by:
detecting a sensor signal from the wireless interface corresponding to a location of the sport projectile at a point in time corresponding to a starting point of the motion characteristic;
comparing the location of the sport projectile at the starting point of the motion characteristic to a mapping of a playing area; and
determining the point value based on the location of the sport projectile at the starting point of the motion characteristic relative to the mapping of the playing area, wherein a different point value can be assigned to a different starting point.

10. The method of claim 8, comprising:
detecting a first sensor signal indicative of the sports projectile being elevated off a floor of a sport area, the first sensor signal comprising an accelerometer signal that is less than a first pre-determined amplitude;
detecting a second sensor signal indicative of a launching of the sports projectile into the air, the second sensor signal comprising an accelerometer signal that is greater than the first predetermined amplitude but less than a second predetermined amplitude;
detecting a third sensor signal indicative of an airborne travel of the sports projectile, the third sensor signal comprising an accelerometer signal that is substantially constant with an amplitude that is less than the first predetermined amplitude;
detecting a fourth sensor signal indicative of the passage of the sports projectile through the goal structure; and
detecting a fifth sensor signal indicative of the sports projectile striking an object, the fifth sensor signal comprising an accelerometer signal that is greater than a third predetermined amplitude.

11. The method of claim 8, comprising:
comparing changes in sampled sensor data to a predefined threshold for a predetermined number of data samples;
transmitting sensor data to the portable communication device only when the changes in the sampled sensor data exceed the predefined threshold;
storing the sampled sensor data when the changes in the sampled sensor data are less than the predefined threshold;
determining that the changes in the sampled sensor data are greater than the predetermined threshold over a time period exceeding a predetermined time period; and
storing the changes in the sampled sensor data.

12. A computer program product comprising non-transitory computer readable code means, which when executed in the processor of the portable communication device (220) of claim 1, are configured to execute the steps of a method according to anyone of claims 8-11.

13. The sports apparatus or method of any previous claim, wherein said sports projectile is a basketball.

## Patentansprüche

1. Sportvorrichtung (100) zum Überwachen einer Bewegung eines Sportwurfgeschosses (200), umfassend:
einen Sensor (204), der innerhalb des Sportwurfgeschosses angeordnet ist;
eine drahtlose Schnittstelle (206), die innerhalb des Sportwurfgeschosses angeordnet ist, zum Übertragen von abgetasteten Datensignalen von dem Sensor (204);
eine portable Kommunikationseinrichtung (220), die in einer drahtlosen Kommunikation mit dem Sensor in dem Sportwurfgeschoss (200) verbunden werden kann, zum Empfangen abgetasteter Datensignale von dem Sensor (204), wobei die abgetasteten Datensignale anzeigend sind für eine Bewegung des Sportwurfgeschosses (200);
wobei die portable Kommunikationseinrichtung (220) einen Controller umfasst, der einen Speicher aufweist, der Programmierbefehle beinhaltet, welche, wenn sie durch den Prozessor ausgeführt werden, ausgelegt sind, den Controller zu veranlassen:
ein Sensorsignal von der drahtlosen Schnittstelle zu erfassen, wobei das Sensorsignal abgetastete Datensignale von dem Sensor umfasst;
eine Bewegungseigenschaft des Sportwurfgeschosses aus der Bewegungseigenschaft von dem Sensorsignal zu bestimmen; und
zu bestimmen, ob die Bewegungseigenschaft einen Durchlauf des Sportwurfgeschosses durch eine Zielstruktur (410) umfasst;
zu bestimmen, ob die Bewegungseigenschaft eine Bewegung des Sportwurfgeschosses nach einem Schuss umfasst; und
zu bestimmen, ob die Bewegungseigenschaft einen Aufprall des Sportwurfgeschosses auf ein Objekt umfasst, durch:
Erfassen einer Periode kleiner Änderungen in den Sensordaten durch Vergleichen einer Amplitude der Sensordaten mit einer ersten vorbestimmten Schwelle innerhalb einer vorbestimmten Zeitperiode und Bestimmen, dass die Amplitude der Sensordaten geringer als die vorbestimmte Schwelle und im Wesentlichen konstant innerhalb der vorbestimmten Zeitperiode ist; und
Erfassen einer Periode von sich schnell ändernden Sensordaten durch Bestimmen, dass die Amplitude der Sensordaten größer als die vorbestimmte Schwelle ist und innerhalb der vorbestimmten Zeitperiode variiert.

2. Sportvorrichtung (100) nach Anspruch 1, umfassend einen zentralen gepanzerten Kern (310) innerhalb des Sportwurfgeschosses zum Aufnehmen des Sensors (204) und der drahtlosen Schnittstelle (206), wobei die drahtlose Schnittstelle drei Sätze von Dipolen (A-A, B-B, C-C) umfasst, die jeweils einzeln durch die drahtlose Schnittstelle anregbar sind, und wobei die drei Dipole auf eine orthogonale Weise entlang dreier kartesischer Achsen angeordnet sind, und umfassend eine induktiv geladene Batterie für die drahtlose Schnittstelle, die innerhalb des Sportwurfgeschosses (200) angeordnet ist.

3. Sportvorrichtung nach Anspruch 1, wobei die portable Kommunikationseinrichtung (220) einen Controller umfasst, der einen Speicher aufweist, der Programmbefehle beinhaltet, welche, wenn sie durch den Prozessor ausgeführt werden, ausgelegt sind, den Controller zu veranlassen:
ein Sensorsignal von der drahtlosen Schnittstelle (206) zu erfassen, welches einer Änderung in einem Magnetfeld entspricht; und
einen Durchlauf des Sportwurfgeschosses durch die Zielstruktur auf Grundlage der Änderung in dem Magnetfeld und der bestimmten Bewegungseigenschaft zu bestimmen, und/oder
einen Punktwert zu bestimmen, der dem Durchlauf des Sportwurfgeschosses durch die Zielstruktur zugeordnet ist, durch:
Erfassen eines Sensorsignals von der drahtlosen Schnittstelle, das einem Ort des Sportwurfgeschosses zu einem Zeitpunkt entspricht, welcher einem Startpunkt der Bewegungseigenschaft entspricht;
Vergleichen des Orts des Sportwurfgeschosses an dem Startpunkt der Bewegungseigenschaft mit einer Abbildung einer Spielfläche; und
Bestimmen des Punktwerts auf Grundlage des Orts des Sportwurfgeschosses an dem Startpunkt der Bewegungseigenschaft relativ zu der Abbildung der Spielfläche, wobei ein unterschiedlicher Punktwert einem unterschiedlichen Startpunkt zugeordnet werden kann.

4. Sportvorrichtung nach Anspruch 1, wobei die portable Kommunikationseinrichtung einen Controller umfasst, der einen Speicher aufweist, der Programmbefehle beinhaltet, welche, wenn sie durch den Prozessor ausgeführt werden, ausgelegt sind, den Controller zu veranlassen:
ein erstes Sensorsignal zu erfassen, das anzeigend für ein Abheben des Sportwurfgeschosses von einem Boden einer Sportfläche ist, wobei das erste Sensorsignal ein Beschleunigungsaufnehmersignal umfasst, das geringer als eine erste vorbestimmte Amplitude ist;
ein zweites Sensorsignal zu erfassen, das anzeigend für ein Abschießen des Sportwurfgeschosses in die Luft ist, wobei das zweite Sensorsignal ein Beschleunigungsaufnehmersignal umfasst, das größer als die erste vorbestimmte Amplitude, aber geringer als eine zweite vorbestimmte Amplitude ist;
ein drittes Sensorsignal zu erfassen, das anzeigend für eine Beförderung des Sportwurfgeschosses durch die Luft ist, wobei das dritte Sensorsignal ein Beschleunigungsaufnehmersignal umfasst, das im Wesentlichen konstant mit einer Amplitude ist, die geringer als die erste vorbestimmte Amplitude ist;
ein viertes Sensorsignal zu erfassen, das anzeigend für den Durchlauf des Sportwurfgeschosses durch die Zielstruktur ist; und
ein fünftes Sensorsignal zu erfassen, das anzeigend für ein Auftreffen des Sportwurfgeschosses auf ein Objekt ist, wobei das fünfte Sensorsignal ein Beschleunigungsaufnehmersignal umfasst, das größer als eine dritte vorbestimmte Amplitude ist.

5. Sportvorrichtung nach Anspruch 1, wobei der zentrale Kern (310) einen Speicher (712) zum Speichern von Daten von dem Sensor umfasst, wobei der Speicher Programmierbefehle beinhaltet, welche, wenn sie von einem Prozessor in der drahtlosen Schnittstelle ausgeführt werden, ausgelegt sind, die drahtlose Schnittstelle zu veranlassen:
Änderungen in abgetasteten Sensordaten mit einer vordefinierten Schwelle für eine vorbestimmte Anzahl von Abtastwerten zu vergleichen;
Sensordaten zu der portablen Kommunikationseinrichtung nur dann zu senden, wenn die Änderungen in den abgetasteten Sensordaten die vordefinierte Schwelle überschreiten; und
die abgetasteten Sensordaten zu speichern, wenn die Änderungen in den abgetasteten Sensordaten geringer als die vordefinierte Schwelle sind.

6. Sportvorrichtung nach Anspruch 5, wobei der Speicher Programmierbefehle beinhaltet, welche, wenn sie von einem Prozessor in der drahtlosen Schnittstelle ausgeführt werden, ausgelegt sind, die drahtlose Schnittstelle zu veranlassen:
zu bestimmen, dass die Änderungen in den abgetasteten Sensordaten größer als die vorbestimmte Schwelle über eine Zeitperiode sind, die eine vorbestimmte Zeitperiode überschreitet; und
die Änderungen in den abgetasteten Sensordaten zu speichern.

7. Sportvorrichtung nach Anspruch 1, umfassend eine Serveranordnung (234) entfernt von und kommunikationsmäßig verbunden mit der portablen elektronischen Einrichtung (220), wobei die portable elektronische Einrichtung ausgelegt ist, Analysedaten des Sensorsignals zu einem Netz zu übertragen.

8. Verfahren zur Verwendung einer Sportvorrichtung zum Überwachen einer Bewegung eines Sportwurfgeschosses, umfassend einen Sensor und eine drahtlose Schnittstelle, die innerhalb des Sportwurfgeschosses angeordnet sind, zum Übertragen von abgetasteten Datensignalen von dem Sensor, und eine portable Kommunikationseinrichtung, die in einer drahtlosen Kommunikation mit dem Sensor in dem Sportwurfgeschoss verbunden ist, zum Empfangen von abgetasteten Datensignalen von dem Sensor, wobei die abgetasteten Datensignale anzeigend sind für eine Bewegung des Sportwurfgeschosses, wobei das Verfahren umfasst:
Erfassen, in der portablen Kommunikationseinrichtung, eines Sensorsignals von der drahtlosen Schnittstelle, wobei das Sensorsignal abgetastete Datensignale von dem drahtlosen Sensor umfasst;
Bestimmen einer Bewegungseigenschaft des Sportwurfgeschosses aus der Bewegungseigenschaft von dem Sensorsignal; und
Bestimmen, ob die Bewegungseigenschaft einen Durchlauf des Sportwurfgeschosses durch eine Zielstruktur umfasst;
Bestimmen, ob die Bewegungseigenschaft eine Bewegung des Sportwurfgeschosses nach einem Schuss umfasst; und
Bestimmen, ob die Bewegungseigenschaft einen Aufprall des Sportwurfgeschosses auf ein Objekt umfasst, durch
Erfassen einer Periode kleiner Änderungen in den Sensordaten durch ein Vergleichen einer Amplitude der Sensordaten mit einer ersten vorbestimmten Schwelle innerhalb einer vorbestimmten Zeitperiode und Bestimmen, dass die Amplitude der Sensordaten geringer als die vorbestimmte Schwelle und im Wesentlichen konstant innerhalb der vorbestimmten Zeitperiode ist; und
Erfassen einer Periode von sich schnell ändernden Sensordaten durch ein Bestimmen, dass die Amplitude der Sensordaten größer als die vorbestimmte Schwelle ist und innerhalb der vorbestimmten Zeitperiode variiert.

9. Verfahren nach Anspruch 8, umfassend:
Erfassen eines Sensorsignals von der drahtlosen Schnittstelle, welches einer Änderung in einem Magnetfeld entspricht; und
Bestimmen eines Durchlaufs des Sportwurfgeschosses durch die Zielstruktur auf Grundlage der Änderung in dem Magnetfeld und der bestimmten Bewegungseigenschaft, und/oder
Bestimmen eines Punktwerts, der dem Durchlauf des Sportwurfgeschosses durch die Zielstruktur zugeordnet ist, durch:
Erfassen eines Sensorsignals von der drahtlosen Schnittstelle, das einem Ort des Sportwurfgeschosses zu einem Zeitpunkt entspricht, welcher einem Startpunkt der Bewegungseigenschaft entspricht;
Vergleichen des Orts des Sportwurfgeschosses an dem Startpunkt der Bewegungseigenschaft mit einer Abbildung einer Spielfläche; und
Bestimmen des Punktwerts auf Grundlage des Orts des Sportwurfgeschosses an dem Startpunkt der Bewegungseigenschaft relativ zu der Abbildung der Spielfläche, wobei ein unterschiedlicher Punktwert einem unterschiedlichen Startpunkt zugeordnet werden kann.

10. Verfahren nach Anspruch 8, umfassend:
Erfassen eines ersten Sensorsignals, das anzeigend für ein Abheben des Sportwurfgeschosses von einem Boden einer Sportfläche ist, wobei das erste Sensorsignal ein Beschleunigungsaufnehmersignal umfasst, das geringer als eine erste vorbestimmte Amplitude ist;
Erfassen eines zweiten Sensorsignals, das anzeigend für ein Abschießen des Sportwurfgeschosses in die Luft ist, wobei das zweite Sensorsignal ein Beschleunigungsaufnehmersignal umfasst, das größer als die erste vorbestimmte Amplitude, aber geringer als eine zweite vorbestimmte Amplitude ist;
Erfassen eines dritten Sensorsignals, das anzeigend für eine Beförderung des Sportwurfgeschosses durch die Luft ist, wobei das dritte Sensorsignal ein Beschleunigungsaufnehmersignal umfasst, das im Wesentlichen konstant mit einer Amplitude ist, die geringer als die erste vorbestimmte Amplitude ist;
Erfassen eines vierten Sensorsignals, das anzeigend für den Durchlauf des Sportwurfgeschosses durch die Zielstruktur ist; und
Erfassen eines fünften Sensorsignals, das anzeigend für ein Auftreffen des Sportwurfgeschosses auf ein Objekt ist, wobei das fünfte Sensorsignal ein Beschleunigungsaufnehmersignal umfasst, das größer als eine dritte vorbestimmte Amplitude ist.

11. Verfahren nach Anspruch 8, umfassend:
Vergleichen von Änderungen in abgetasteten Sensordaten mit einer vordefinierten Schwelle für eine vorbestimmte Anzahl von Abtastwerten;
Senden von Sensordaten zu der portablen Kommunikationseinrichtung nur dann, wenn die Änderungen in den abgetasteten Sensordaten die vordefinierte Schwelle überschreiten;
Speichern der abgetasteten Sensordaten, wenn die Änderungen in den abgetasteten Sensordaten geringer als die vordefinierte Schwelle sind;
Bestimmen, dass die Änderungen in den abgetasteten Sensordaten größer als die vorbestimmte Schwelle über eine Zeitperiode sind, die eine vorbestimmte Zeitperiode überschreitet; und
Speichern der Änderungen in den abgetasteten Sensordaten.

12. Computerprogrammprodukt, umfassend nicht-flüchtige computerlesbare Codemittel, welche, wenn sie in dem Prozessor der portablen Kommunikationseinrichtung (220) gemäß Anspruch 1 ausgeführt werden, ausgelegt sind, die Schritte eines Verfahrens gemäß einem der Ansprüche 8 bis 11 auszuführen.

13. Sportvorrichtung oder Verfahren nach einem vorhergehenden Anspruch, wobei das Sportwurfgeschoss ein Basketball ist.

## Revendications

1. Appareil de sport (100) destiné à surveiller le mouvement d un projectile de sport (200), comprenant:
un capteur (204) disposé dans le projectile de sport;
une interface sans fil (206) disposée dans le projectile de sport afin de communiquer des signaux de données échantillonnées du capteur (204);
un dispositif portable de communication (220) qui peut être couplé en communication sans fil avec le capteur dans le projectile de sport (200) afin de recevoir des signaux de données échantillonnées du capteur (204), ces signaux de données échantillonnées étant indicatifs d un mouvement du projectile de sport (200);
dans lequel le dispositif portable de communication (220) comprend un contrôleur disposant d une mémoire contenant des instructions programmées telles que, lorsqu elles sont exécutées par le processeur, le contrôleur:
détecte un signal de capteur provenant de l interface sans fil, ce signal de capteur comprenant des signaux de données échantillonnées du capteur;
détermine une caractéristique du mouvement du projectile de sport à partir de la caractéristique du mouvement fournie par le signal de capteur; et
détermine si la caractéristique du mouvement comprend le passage du projectile de sport dans une structure de but (410);
détermine si la caractéristique du mouvement comprend le mouvement du projectile de sport après un tir; et
détermine si la caractéristique du mouvement comprend l impact d un objet par le projectile de sport, moyennant:
la détection d une période de faibles changements concernant les données du capteur par comparaison de l amplitude des données du capteur et d un premier seuil prédéterminé au cours d une période prédéterminée et par détermination que l amplitude des données du capteur est inférieure au seuil prédéterminé et sensiblement constante au cours de la période prédéterminée; et
la détection d une période de changements rapides concernant les données du capteur par détermination que l amplitude des données du capteur est supérieure au seuil prédéterminé et varie au cours de la période prédéterminée.

2. Appareil de sport (100) selon la revendication 1, comprenant, dans le projectile de sport, un noyau central blindé (310) destiné à loger le capteur (204) et l interface sans fil (206), dans lequel l interface sans fil comprend trois jeux de dipôles (A-A, B-B, C-C) dont chacun peut être excité par l interface sans fil, et dans lequel les trois dipôles sont disposés orthogonalement selon trois axes cartésiens, et comprenant une batterie chargée par induction et destinée à alimenter l interface sans fil disposée dans le projectile de sport (200).

3. Appareil de sport selon la revendication 1, dans lequel le dispositif portable de communication (220) comprend un contrôleur disposant d une mémoire contenant des instructions programmées telles que, lorsqu elles sont exécutées par le processeur, le contrôleur:
détecte un signal de capteur provenant de l interface sans fil (206) et correspondant à une variation d un champ magnétique; et
détermine que le projectile de sport passe dans une structure de but, en se basant sur la variation du champ magnétique et sur la caractéristique du mouvement déterminée, et/ou
détermine une valeur en points associée au passage du projectile de sport dans la structure de but, moyennant:
la détection d un signal de capteur provenant de l interface sans fil et correspondant à un emplacement du projectile de sport à un instant correspondant à un point de départ de la caractéristique du mouvement;
la comparaison, à un schéma d un terrain de jeu, de l emplacement du projectile de sport au point de départ de la caractéristique du mouvement ; et
la détermination de la valeur en points en fonction de l emplacement, dans le schéma du terrain de jeu, du projectile de sport au point de départ de la caractéristique du mouvement, une valeur en points différente pouvant être attribuée à un point de départ différent.

4. Appareil de sport selon la revendication 1, dans lequel le dispositif portable de communication comprend un contrôleur disposant d une mémoire contenant des instructions programmées telles que, lorsqu elles sont exécutées par le processeur, le contrôleur:
détecte un premier signal de capteur indicatif d une élévation du projectile de sport à partir du sol d un terrain de sport, ce premier signal de capteur comprenant un signal d accéléromètre inférieur à une première amplitude prédéterminée ;
détecte un deuxième signal de capteur indicatif d un lancement en l air du projectile de sport, ce deuxième signal de capteur comprenant un signal d accéléromètre supérieur à la première amplitude prédéterminée mais inférieur à une deuxième amplitude prédéterminée;
détecte un troisième signal de capteur indicatif d un déplacement aérien du projectile de sport, ce troisième signal de capteur comprenant un signal d accéléromètre sensiblement constant et inférieur à la première amplitude prédéterminée;
détecte un quatrième signal de capteur indicatif du passage du projectile de sport dans une structure de but; et
détecte un cinquième signal de capteur indicatif de la frappe d un objet par le projectile de sport, ce cinquième signal de capteur comprenant un signal d accéléromètre supérieur à une troisième amplitude prédéterminée.

5. Appareil de sport selon la revendication 1, dans lequel le noyau central (310) comprend une mémoire (712) destinée à enregistrer les données du capteur, cette mémoire contenant des instructions programmées telles que, lorsqu elles sont exécutées par un processeur dans l interface sans fil, l interface sans fil:
compare les changements concernant les données échantillonnées du capteur et un seuil prédéfini pour un nombre prédéterminé d échantillons de données;
transmet les données du capteur au dispositif portable de communication uniquement lorsque les changements concernant les données échantillonnées du capteur sont supérieurs au seuil prédéfini; et
enregistre les données échantillonnées du capteur lorsque les changements concernant les données échantillonnées du capteur sont inférieurs au seuil prédéfini.

6. Appareil de sport selon la revendication 5, la mémoire contenant des instructions programmées telles que, lorsqu elles sont exécutées par un processeur dans l interface sans fil, l interface sans fil:
détermine que les changements concernant les données échantillonnées du capteur sont supérieurs au seuil prédéterminé pendant une période plus longue qu une période prédéterminée; et
enregistre les changements concernant les données échantillonnées du capteur.

7. Appareil de sport selon la revendication 1, comprenant un agencement de serveur (234) distant du dispositif électronique portable (220) et couplé en communication avec ce dernier, ce dispositif électronique portable étant configuré pour communiquer à un réseau les données d analyse du signal de capteur.

8. Procédé d utilisation d un appareil de sport destiné à surveiller le mouvement d un projectile de sport et comprenant un capteur, une interface sans fil disposée dans le projectile de sport afin de communiquer des signaux de données échantillonnées du capteur, et un dispositif portable de communication couplé en communication sans fil avec le capteur dans le projectile de sport afin de recevoir des signaux de données échantillonnées du capteur, ces signaux de données échantillonnées étant indicatifs d un mouvement du projectile de sport, ledit procédé comprenant:
la détection, dans le dispositif portable de communication, d un signal de capteur provenant de l interface sans fil, ce signal de capteur comprenant des signaux de données échantillonnées du capteur sans fil;
la détermination d une caractéristique du mouvement du projectile de sport à partir de la caractéristique du mouvement fournie par le signal de capteur; et
la détermination visant à savoir si la caractéristique du mouvement comprend le passage du projectile de sport dans une structure de but;
la détermination visant à savoir si la caractéristique du mouvement comprend le mouvement du projectile de sport après un tir; et
la détermination visant à savoir si la caractéristique du mouvement comprend l impact d un objet par le projectile de sport, moyennant:
la détection d une période de faibles changements concernant les données du capteur par comparaison de l amplitude des données du capteur et d un premier seuil prédéterminé au cours d une période prédéterminée et par détermination que l amplitude des données du capteur est inférieure au seuil prédéterminé et sensiblement constante au cours de la période prédéterminée; et
la détection d une période de changements rapides concernant les données du capteur par détermination que l amplitude des données du capteur est supérieure au seuil prédéterminé et varie au cours de la période prédéterminée.

9. Procédé selon la revendication 8, comprenant:
la détection d un signal de capteur provenant de l interface sans fil et correspondant à une variation d un champ magnétique; et
la détermination que le projectile de sport passe dans une structure de but, basée sur la variation du champ magnétique et sur la caractéristique du mouvement déterminée, et/ou
la détermination d une valeur en points associée au passage du projectile de sport dans la structure de but, moyennant:
la détection d un signal de capteur provenant de l interface sans fil et correspondant à un emplacement du projectile de sport à un instant correspondant à un point de départ de la caractéristique du mouvement;
la comparaison, à un schéma d un terrain de jeu, de l emplacement du projectile de sport au point de départ de la caractéristique du mouvement; et
la détermination de la valeur en points en fonction de l emplacement, dans le schéma du terrain de jeu, du projectile de sport au point de départ de la caractéristique du mouvement, une valeur en points différente pouvant être attribuée à un point de départ différent.

10. Procédé selon la revendication 8, comprenant:
la détection d un premier signal de capteur indicatif d une élévation du projectile de sport à partir du sol d un terrain de sport, ce premier signal de capteur comprenant un signal d accéléromètre inférieur à une première amplitude prédéterminée;
la détection d un deuxième signal de capteur indicatif d un lancement en l air du projectile de sport, ce deuxième signal de capteur comprenant un signal d accéléromètre supérieur à la première amplitude prédéterminée mais inférieur à une deuxième amplitude prédéterminée;
la détection d un troisième signal de capteur indicatif d un déplacement aérien du projectile de sport, ce troisième signal de capteur comprenant un signal d accéléromètre sensiblement constant et inférieur à la première amplitude prédéterminée ;
la détection d un quatrième signal de capteur indicatif du passage du projectile de sport dans une structure de but; et
la détection d un cinquième signal de capteur indicatif de la frappe d un objet par le projectile de sport, ce cinquième signal de capteur comprenant un signal d accéléromètre supérieur à une troisième amplitude prédéterminée.

11. Procédé selon la revendication 8, comprenant:
la comparaison des changements concernant les données échantillonnées du capteur et d un seuil prédéfini pour un nombre prédéterminé d échantillons de données;
la transmission des données du capteur au dispositif portable de communication uniquement lorsque les changements concernant les données échantillonnées du capteur sont supérieurs au seuil prédéfini;
l enregistrement des données échantillonnées du capteur lorsque les changements concernant les données échantillonnées du capteur sont inférieurs au seuil prédéfini;
la détermination que les changements concernant les données échantillonnées du capteur sont supérieurs au seuil prédéterminé au cours d une période plus longue qu une période prédéterminée; et
l enregistrement des changements concernant les données échantillonnées du capteur.

12. Produit logiciel comprenant un moyen à code non transitoire lisible par ordinateur tel que, lorsqu il est exécuté par le processeur du dispositif portable de communication (220) de la revendication 1, les étapes d un procédé selon l une quelconque des revendications 8 à 11 sont effectuées.

13. Appareil de sport ou procédé selon l une quelconque des revendications précédentes, dans lequel ledit projectile de sport est un ballon de basket.
